# EUROPÄISCHE PATENTSCHRIFT

(11) **EP 0 517 951 B1**
(45) Veröffentlichungstag und Bekanntmachung des Hinweises auf die Patenterteilung: **29.11.1995**
(21) Anmeldenummer: 91115424.3
(22) Anmeldetag: 12.09.1991
(51) Int. Cl.: F16C 29/04, F16C 29/12, F16C 29/06, F16C 29/00

(54) **Befestigung für einen ein Laufelement aufweisenden Lagerkörper einer Längsführung**
Device for fixing a housing supporting a rolling element for a linear bearing
Dispositif de fixation d'un corps porteur d'un élément de roulement pour un guidage linéaire

(30) Priorität: 26.09.1990 DE 9013522 U
(43) Veröffentlichungstag der Anmeldung: 16.12.1992
(73) Patentinhaber: SCHAEFFLER WÄLZLAGER OHG, D-66424 Homburg (DE)
(72) Erfinder: Hutzel, Bernhard, Dipl.-Ing., W-6680 Neunkirchen (DE)
(74) Vertreter: Harwardt, Günther, Dipl.-Ing.

(56) Entgegenhaltungen:
- EP-A- 0 353 390
- GB-A- 2 150 057
- US-A- 2 185 304
- US-A- 2 719 761
- US-A- 4 884 898
- PATENT ABSTRACTS OF JAPAN vol. 9, no. 146 (M-389)(1869) 21. Juni 1985 & JP-A-60 025 628 (TERAMACHI)

## Beschreibung

Die Erfindung betrifft eine einstellbare Befestigung für einen mindestens ein Laufelement lagernden Lagerkörper einer Längsführung gegenüber einer Laufschiene, entlang welcher er bewegbar ist, und der über Befestigungsschrauben an einer Anschlußfläche eines zu bewegenden Maschinen- oder Laufwagenteils festgelegt ist, wobei der Lagerkörper eine Stellvorrichtung aufweist, die zu seiner Verlagerung eine Stellhülse beaufschlagt, durch die eine der Befestigungsschrauben zum Eingriff in eine Bohrung des zu lagernden Maschinen- oder Laufwagenteils hindurchgeführt ist.

Eine derartige Befestigung für einen Lagerkörper einer Längsführung, die als Wälzkörperführung gestaltet ist, ist in der EP-A-0353390 beschrieben. Der Lagerkörper weist eine Durchgangsbohrung auf, in die eine außen zylindrische Exzenterbuchse eingesetzt ist. Die Buchse besitzt eine zu ihrer Außenfläche exzentrische Bohrung, durch die ein dazu passender Zylinderbolzen hindurchgeführt ist. Durch Verdrehen der Exzenterbuchse kann eine Verstellung des Lagerkörpers erfolgen.

In der DE 36 38 968 A 1 ist eine Längsführung beschrieben, bei der ein mindestens ein Laufelement lagernder Lagerkörper durch Befestigungsschrauben an einer Anschlußfläche eines zu bewegenden Maschinen- oder Laufwagenteils festgelegt ist. Zur Lageeinstellung des Lagerkörpers dient eine Stellschraube, die sich an einer der Befestigungsschrauben unter Zwischenschaltung eines Übertragungselementes abstützt. Die Befestigungsschrauben sind vom Maschinen- oder Laufwagenteil her in den Lagerkörper einschraubbar. Dabei wirkt die Stellschraube auf ein als Druckkissen gestaltetes Übertragungselement ein. Die Stellschraube ist in einer Gewindebohrung, die quer zur Bohrung der Befestigungsschraube im Maschinen- oder Laufwagenteil verläuft, angeordnet.

Bei Längsführungen bilden die Lagerkörper mit dem Laufelement, zum Beispiel Rollen- und Kugelumlaufschuhe sowie Laufrollenkassetten, und die Laufschiene Bauteile, die vom Maschinen- oder Anlagenhersteller, d. h. dem Verwender erst den zu lagernden und einander gegenüber zu führenden Maschinen- und Anlageteilen zugeordnet werden. Die nach dem Stand der Technik vorgesehene Spieleinstellung erfordert, daß der Verwender selbst die nötige Gewindebohrung für die Stellschraube konstruktiv gegenüber der Durchgangsbohrung für die Befestigungsschraube festlegt und ausführt. Für den Fall, daß die Stellschraube nicht unmittelbar auf die Befestigungsschraube einwirkt, hat er diese auch dem Übertragungsmittel in Form des Druckpolsters selbst anzupassen. Um die Kräfte richtungsgenau einleiten zu können, ist eine bestimmte Positionierung der Stellschraube gegenüber der Befestigungsschraube einzuhalten.

Der Erfindung liegt die Aufgabe zugrunde, die bekannte Ausführungsform so zu verbessern, daß der Verwender der Baueinheit, welche den Lagerkörper und die Laufelemente umfaßt, lediglich für die zur Befestigung des Lagerkörpers dienenden Schrauben erforderlichen Gewindebohrungen zu sorgen hat, wobei jedoch eine Spieleinstellbarkeit gegenüber der Laufschiene mit einfachen Mitteln gewährleistet ist.

Diese Aufgabe wird erfindungsgemäß dadurch gelöst, daß die Stellvorrichtung, die die Stellhülse baufschlagt, eine Stellschraube ist, die sich an einer der Befestigungsschrauben unter Zwischenschaltung der Stellhülse abstützt, und daß die Bohrung, in welche die durch die Stellhülse hindurchgeführte Befestigungsschraube eingreift, eine Gewindebohrung ist.

Von Vorteil bei dieser Ausbildung ist, daß gleich bei der Herstellung des Lagerkörpers die Bohrungen für die Stellschraube und die Aufnahme für die Stellhülse hergestellt werden können. Gleichzeitig werden diese Bauteile unmittelbar dem Lagerkörper zugeordnet, so daß der Verwender eine fertig einsetzbare Baueinheit erhält.

Der Verwender braucht nicht auf die konstruktiven Erfordernisse der Lagebestimmung der Stellschraube gegenüber der Befestigungsschraube zu achten. Er hat an dem Maschinenteil, an dem die Längsführung angebracht werden soll, lediglich die Befestigungsbohrungen für die Befestigungsschrauben vorzusehen. Ein weiterer Vorteil besteht darin, daß die Stellschraube infolge der Zuordnung zu dem Lagerkörper für die Einstellung ohne Schwierigkeiten zugänglich ist, während bei der Anbringung an einem Maschinenteil, wenn es sich nicht um eine einfache Lagerplatte handelt, häufig Schwierigkeiten für den Montagezustand gegeben sind.

Ein weiterer Vorteil besteht darin, daß die Stellschraube ziehend and der Stellhülse angreift. Die Stellhülse umgreift die Stellschraube. Sie sorgt dafür, daß die Einstellkraft zumindest auf eine Linienberührung zwischen Schraube und Stellhülse bzw. deren Bohrungswandung verteilt wird.

In weiterer Ausgestaltung ist vorgesehen, daß die Stellschraube eine Kopfschraube ist, die in eine radial verlaufende Gewindebohrung der Stellhülse eingeschraubt ist.

Ferner ist vorgesehen, daß der Lagerkörper sich mit einer Anlagefläche in Anlage zur Anschlußfläche des zu lagernden Maschinen- oder Laufwagenteils befindet, wobei die Stellhülse in einer von der Anlagefläche ausgehenden Einsenkung zur Aufnahmebohrung für die Befestigungsschraube eingesetzt und dort bezüglich der Bohrungsachse radial verschieblich ist. Vorzugsweise ist die Stellschraube ausgehend von einer rechtwinklig zur Anlagefläche verlaufenden Seitenfläche des Lagerkörpers eingeschraubt.

Ein bevorzugtes Einsatzgebiet für eine solche Spieleinstellung sind mit Laufrollen ausgestattete Längsführungen. Daher ist für diese vorgesehen, daß im Lagerkörper zwei als Laufrollen gestaltete Laufelemente drehgelagert sind, wobei die Stellschraube und die Stellhülse eine zwischen den beiden Laufrollen angeordnete Befestigungsschraube beaufschlagen.

In der Zeichnung ist die Anwendung der erfindungsgemäßen Befestigung für Längsführungen mit einem eine bzw. zwei Laufrollen aufweisenden Lagerkörper dargestellt.

Es zeigt
- Figur 1: eine Aufsicht auf eine Lagerkassette bei entfernter Abdeckung,
- Figur 2: einen Schnitt B-B gemäß Figur 1, jedoch mit Abdeckung,
- Figur 3: einen Schnitt A-A gemäß Figur 1, mit Abdeckung,
- Figur 4: eine Vorderansicht zu Figur 1, ebenfalls mit Abdeckung und
- Figur 5: eine Aufsicht auf eine Lagerkassette mit zwei Laufrollen, bei entfernter Abdeckung.

Die in den Zeichnungsfiguren 1 bis 5 jeweils dargestellte Lagerkassette 1 umfaßt den Lagerkörper 2, in dem Laufrollen 3 um jeweils eine Drehachse 4 frei drehbar angeordnet sind. Die Lagerung ist nicht im einzelnen dargestellt. Sie umfaßt beispielsweise auch eine Wälzlagerung.

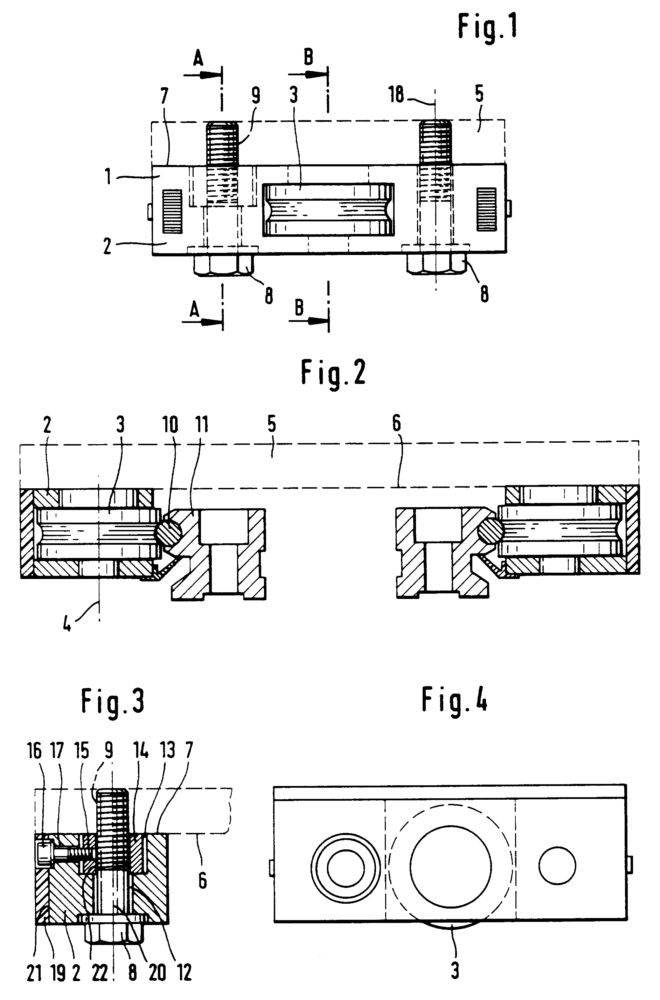

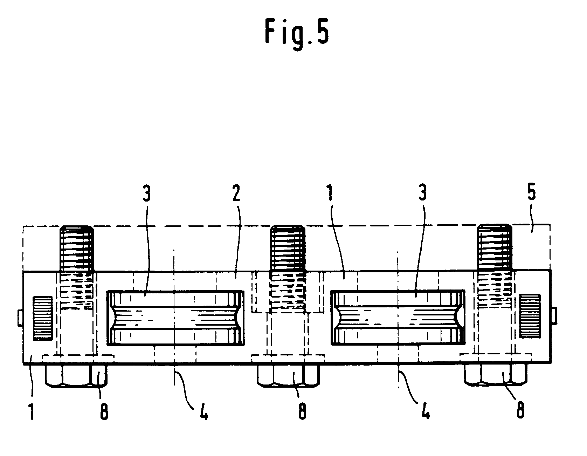

Bei dem Ausführungsbeispiel nach den Figuren 1 bis 4 ist nur eine Laufrolle 3 vorgesehen, während bei der Ausführungsform nach Figur 5 zwei Laufrollen der Lagerkassette 1 zugeordnet sind.

Bei der Ausführungsform nach den Figuren 1 bis 4 ist erkennbar, daß die Lagerkassetten 1, insbesondere deren Lagerkörper 2, an einer Anschlußfläche 6 eines Maschinen- oder Laufwagenteils, vorzugsweise einer Laufwagenplatte 5 anliegend befestigt sind. Die Lagerkörper 2 liegen mit ihrer Anlagefläche 7 an der Anschlußfläche 6 an. Die Befestigung des Lagerkörpers 2 erfolgt durch zwei Befestigungsschrauben 8, welche durch den Lagerkörper 2 hindurchgesteckt sind und mit ihrem Gewinde in eine Gewindebohrung 9 der Laufwagenplatte 5 eingeschraubt sind. Aus Figur 2 ist erkennbar, daß einer Laufwagenplatte 5 mindestens zwei Lagerkassetten 1 zugeordnet sind, welche die Laufwagenplatte 5 oder das zu lagernde Maschinen- oder Laufwagenteil an zwei parallel an einem Maschinenbett über einen Laufschienenträger 11 befestigte Laufschienen 10 in zwei gegeneinander gerichteten Richtungen führen. Die Laufrollen 3 weisen dabei eine Kontur auf, die dem runden Querschnitt der Laufschienen 10 angepaßt ist.

Zur Spieleinstellung des Führungsspiels der Laufwagenplatte 5 gegenüber den beiden Laufschienen 10 muß mindestens eine der beiden Lagerkassetten 1 mit einer Spieleinstellungsmöglichkeit versehen sein, wie sie nachfolgend beschrieben ist.

Einer der beiden Befestigungsschrauben 8 gemäß Figur 1 für eine Lagerkassette ist eine Stellhülse 14 zugeordnet, die über eine Stellschraube 16, die als Kopfschraube gestaltet ist, radial bezüglich der Bohrungsachse 20 verschiebbar ist. Die Stellhülse 14 ist mit Radialspiel in einer Einsenkung 13 der Aufnahmebohrung 12 für die Befestigungsschraube 8 aufgenommen. Die Stellhülse 14 weist eine Bohrung 22 auf, welche von dem Schaft der Kopfschraube 8 durchgriffen wird. Die Stellschraube 16 durchgreift eine Bohrung 17, die von der Seitenfläche 21, die rechtwinklig zur Anlagefläche 7 verläuft, ausgeht. Diese ist als Durchgangsbohrung gestaltet. Die Kopfschraube 16 reicht mit ihrem Gewindeschaft in eine radial verlaufende Gewindebohrung 15 der Stellhülse 14 hinein. Durch die Kopfschraube 16 kann ziehend auf die Stellhülse 14 eingewirkt werden. Die Stellhülse 14 stützt sich am Schaft der Befestigungsschraube 8 ab. Dabei erfolgt eine Verlagerung des Lagerkörpers 2 gegenüber der sich relativ zu diesem in Ruhe befindlichen Befestigungsschraube 8. Bei einer Anordnung nach den Figuren 1 bis 4, bei der nur eine Laufrolle 3 vorgesehen ist und bei der die Befestigungsschrauben 8 beidseitig der Drehachse der Laufrollen angeordnet sind, schwenkt die Lagerkassette 1 um die Achse 18 der zweiten Befestigungsschraube 8 so weit, bis das nötige Laufspiel der Längsführung bezüglich der Laufschienen 10 erreicht ist.

Die Lagerkassette 1 weist ferner eine Abdeckung 19 auf, die das System, das heißt, die Lagerelemente gegen die Einwirkung von Schmutz abdichtet.

Bei der Ausbildung nach Figur 5 ist erkenntlich, daß insgesamt drei Befestigungsschrauben 8 vorgesehen sind, die jeweils seitlich der bzw. zwischen den beiden Laufrollen 3 angeordnet sind. In einem solchen Fall sind die aus dem Schnitt gemäß Figur 3 erkennbare Stellhülse 14 und die Stellschraube 16 der zwischen den beiden Laufrollen 3 angeordneten Befestigungsschraube 8 zugeordnet.

Die Anordnung entspricht der gemäß den aus Figur 3 ersichtlichen Details.

### Bezugszeichenliste

- 1: Lagerkassette
- 2: Lagerkörper
- 3: Laufrolle
- 4: Drehachse der Laufrolle
- 5: Laufwagenplatte/Maschinen- oder Laufwagenteil
- 6: Anschlußfläche Laufwagenplatte
- 7: Anlagefläche Lagerkörper
- 8: Befestigungsschrauben
- 9: Gewindebohrung
- 10: Laufschiene
- 11: Laufschienenträger
- 12: Aufnahmebohrung für Befestigungsschrauben
- 13: Einsenkung
- 14: Stellhülse
- 15: Gewindebohrung für Stellschraube
- 16: Stellschraube
- 17: Bohrung für Stellschraube
- 18: Schwenkachse
- 19: Abdeckung
- 20: Bohrungsachse
- 21: Seitenfläche
- 22: Bohrung der Stellhülse

## Patentansprüche

1. Einstellbare Befestigung für einen mindestens ein Laufelement (3) lagernden Lagerkörper (2) einer Längsführung gegenüber einer Laufschiene (10), entlang welcher er bewegbar ist, und der über Befestigungsschrauben (8) an einer Anschlußfläche (6) eines zu bewegenden Maschinen- oder Laufwagenteils (5) festgelegt ist, wobei der Lagerkörper (2) eine Stellvorrichtung aufweist, die zu seiner Verlagerung eine Stellhülse (14) beaufschlagt, durch die eine der Befestigungsschrauben (8) zum Eingriff in eine Bohrung (9) des zu lagernden Maschinen- oder Laufwagenteils (5) hindurchgeführt ist,
dadurch gekennzeichnet,
daß die Stellvorrichtung, die die Stellhülse (14) beaufschlagt, eine Stellschraube (16) ist, die sich an einer der Befestigungsschrauben (8) unter Zwischenschaltung der Stellhülse (14) abstützt, und daß die Bohrung (9), in welche die durch die Stellhülse (14) hindurchgeführte Befestigungsschraube (8) eingreift, eine Gewindebohrung ist.

2. Befestigung nach Anspruch 1,
dadurch gekennzeichnet,
daß die Stellschraube (16) eine Kopfschraube ist, die in eine radial verlaufende Gewindebohrung (15) der Stellhülse (14) eingeschraubt ist.

3. Befestigung nach Anspruch 1,
dadurch gekennzeichnet,
daß der Lagerkörper (2) sich mit einer Anlagefläche (7) in Anlage zur Anschlußfläche (6) des zu lagernden Maschinen- oder Laufwagenteils (5) befindet, wobei die Stellhülse (14) in einer von der Anlagefläche (7) ausgehenden Einsenkung zur Aufnahmebohrung (12) für die Befestigungsschraube (8) eingesetzt und dort bezüglich der Bohrungsachse (20) radial verschieblich ist.

4. Befestigung nach Anspruch 3,
dadurch gekennzeichnet,
daß die Stellschraube (16) ausgehend von einer rechtwinklig zur Anlagefläche (7) verlaufenden Seitenfläche (21) des Lagerkörpers (2) eingeschraubt ist.

5. Befestigung nach Anspruch 1,
dadurch gekennzeichnet,
daß im Lagerkörper (2) zwei als Laufrollen (3) gestaltete Laufelemente drehgelagert sind, wobei die Stellschraube (16) und die Stellhülse (14) eine zwischen den beiden Laufrollen (3) angeordnete Befestigungsschraube (8) beaufschlagen.

## Claims

1. A settable fixing device for a bearing member (2) of a linear bearing, supporting at least one rolling element (3) by which the bearing member is movable along a track (10); said bearing member (2) being secured by fixing bolts (8) to a connecting face (6) of a machine part or carriage part (5) to be moved and comprising a setting device which, for the purpose of displacing said bearing member, loads a setting sleeve (14), with one of the fixing bolts (8) passing therethrough for the purpose of engaging a bore (9) of the machine part or carriage part (5) to be supported,
characterised in
that the setting device loading the setting sleeve (14) is a setting screw (16) supported on one of the fixing bolts (8), with the setting sleeve (14) arranged therebetween, and that the bore (8) engaged by the fixing bolt (8) passing through the setting sleeve (14) is a threaded bore.

2. A fixing device according to claim 1,
characterised
in that the setting screw (16) is a headed screw which is threaded into a radially extending threaded bore (15) of the setting sleeve (14).

3. A fixing device according to claim 1,
characterised in
that the bearing member (2), by means of its contact face (7), is in contact with the connecting face (6) of the machine part or carriage part (5) to be supported, and that the setting sleeve (14) is inserted into an indentation starting from the contact face (7) and extending towards the receiving bore (12) for the fixing bolt (8) and is radially displaceable therein with reference to the bore axis (20).

4. A fixing device according to claim 3,
characterised in
that the setting screw (16) is threaded in, starting from a side face (21) of the bearing member (2), which said face extends at a right angle relative to the contact face (7).

5. A fixing device according to claim 1,
characterised in
that two rolling elements in the form of pulleys (3) are rotatably supported in the bearing member (2), and that the setting screw (16) and the setting sleeve (14) load a fixing bolt (8) arranged between the two pulleys (3).

## Revendications

1. Dispositif de fixation réglable pour un corps de support (2) qui supporte au moins un élément de roulement (3) pour un guidage longitudinal par rapport à un rail de roulement (10), le long duquel ce corps de support est mobile, et ce dernier est fixé au moyen de vis de fixation (8) sur une surface de raccordement (6) d'un élément de machine ou de chariot (5) à déplacer, le corps de support (2) présentant un dispositif de réglage qui sollicite pour son déplacement une douille de réglage (14) à travers laquelle est guidée l'une des vis de fixation (8) pour s'engager dans un perçage (9) de l'élément de machine ou de chariot (5) à supporter,
caractérisé en ce que le dispositif de réglage qui sollicite la douille de réglage (14) est une vis de réglage (16) qui s'appuie contre l'une des vis de fixation (8) avec interposition de la douille de réglage (14), et en ce que le perçage (9) dans lequel s'engage la vis de fixation (8) guidée à travers la douille de réglage (14), est un perçage taraudé.

2. Dispositif de fixation selon la revendication 1,
caractérisé en ce que la vis de réglage (16) est une vis à tête qui est vissée dans un perçage taraudé (15) s'étendant radialement dans la douille de réglage (14).

3. Dispositif de fixation selon la revendication 1,
caractérisé en ce que le corps de support (2) se trouve par l'intermédiaire d'une surface d'appui (7) en appui contre la surface de raccordement (6) de l'élément de machine ou de chariot (5) à supporter, la douille de réglage (14) étant mise en place dans une dépression partant de la surface d'appui (7) en direction du perçage de réception (12) pour la vis de fixation (8), et y est radialement mobile par rapport à l'axe du perçage (20).

4. Dispositif de fixation selon la revendication 3,
caractérisé en ce que la vis de réglage (16) est vissée à partir d'une surface latérale (21) du corps de support (2), qui s'étend sous un angle droit par rapport à la surface d'appui (7).

5. Dispositif de fixation selon la revendication 1,
caractérisé en ce que dans le corps de support (2) sont montés en rotation deux éléments de roulement réalisés sous la forme de galets de roulement (3), la vis de réglage (16) et la douille de réglage (14) sollicitant une vis de fixation (8) agencée entre les deux galets de roulement (3).
